# FASCICULE DE BREVET EUROPEEN

(11) **EP 2 571 148 B1**
(45) Date de publication et mention de la délivrance du brevet: **30.10.2019**
(21) Numéro de dépôt: 12184584.6
(22) Date de dépôt: 14.09.2012
(51) Int. Cl.: H02K 15/03

(54) **Procédé d'assemblage d'une machine électrique à aimants permanents**
Method for assembling an electric machine with permanent magnets
Montageverfahren einer Elektromaschine mit Dauermagneten

(30) Priorité: 16.09.2011 FR 1158257
(43) Date de publication de la demande: 20.03.2013
(73) Titulaire: GE Renewable Technologies, 38100 Grenoble (FR)
(72) Inventeur: Duque, Lina, 09000 Foix (FR); Bats, Guillaume, 09000 Foix (FR); Duceux, Stéphane, 64121 Montardon (FR); De Bortoli, Marc, 64230 Artiguelouve (FR); Ropert, Laurent, 64420 Artigueloutan (FR); Sghiouri, Mohamed, 64000 Pau (FR)
(74) Mandataire: ZBM Patents - Zea, Barlocci & Markvardsen

(56) Documents cités:
- WO-A1-2011/013209
- WO-A2-2010/061200
- GB-A- 2 359 417
- JP-A- H0 888 957
- JP-A- 2010 206 853
- US-A- 5 952 756
- US-B1- 6 481 090

## Description

La présente invention concerne un procédé d'assemblage d'une machine électrique à aimants permanents, et une installation d'assemblage de machine électrique à aimants permanents correspondante.

Une machine électrique à aimants permanents comporte classiquement au moins un stator et un rotor de forme circulaire, apte à tourner autour d'un axe, le rotor comprenant une pluralité d'emplacements destinés à recevoir chacun un aimant. Lorsque le rotor, comportant un ensemble d'aimants, est monté à l'intérieur du ou des stators, une force électromotrice peut être générée par induction électromagnétique suite à une mise en rotation du rotor. Une telle machine électrique à aimants permanents est par exemple un générateur ou un moteur.

Les documents WO2010061200, WO2011013209, GB2359417, DE19805777, US5952756, US6481090, JP 2010206853 et JP H 0888957 décrivent des méthodes d'assemblage pour machines électriques à aimants permanents de l'art antérieur.

L'invention se situe plus généralement dans le domaine de la conversion d'énergie par des machines électriques tournantes à aimants permanents. Elle trouve une application particulière notamment dans les domaines hydroélectrique et éolien.

Dans ce type d'application, des machines de très grande taille sont souvent nécessaires.

Deux types de machines à aimants permanents sont connus, les machines à flux axial et les machines à flux radial.

Une machine à aimants permanents à flux axial comporte un ou deux stators circulaires. Dans le cas d'une configuration à deux stators, le rotor, en forme de disque, est positionné entre les stators et comprend un grand nombre d'aimants de forte puissance positionnés horizontalement dans le plan radial sur le rotor. Selon l'état de la technique, l'assemblage d'une telle machine se fait par positionnement des aimants permanents sur le rotor, à des emplacements prévus à cet effet, selon la direction axiale du rotor. Typiquement, les emplacements prévus sont des trous pratiqués dans une couronne du disque du rotor. Une fois le rotor préparé avec l'ensemble des aimants positionnés, et les stators également préparés, ces éléments sont assemblés de manière à insérer le rotor entre les deux stators, selon un montage « en sandwich ». Pour un tel procédé d'assemblage, tous les aimants permanents garnissant le rotor doivent être positionnés et fixés avant l'assemblage final de la machine.

Une machine à aimants permanents à flux radial comporte classiquement un stator circulaire à l'intérieur duquel est monté un rotor circulaire concentrique. Des aimants permanents disposés verticalement, selon la direction axiale, sont insérés dans le rotor. Traditionnellement, comme dans le cas de la machine à flux axial, le rotor est d'abord garni de l'ensemble de ses aimants, et il est ensuite assemblé avec le stator.

Dans les deux cas de figure, une telle opération d'assemblage comporte divers inconvénients, en particulier lorsque les aimants à placer sont de grande taille et de grande puissance. En effet, des forces d'attraction magnétique très élevées se créent entre le rotor complètement garni d'aimants et les stators. Ces forces sont difficiles à contrôler, d'autant que le placement final souhaité pour la machine est tel qu'un faible espace vide doit être laissé entre le rotor et les stators. Lors de l'assemblage, il est crucial d'empêcher le rotor de venir en contact avec un stator, car, au vu des forces magnétiques exercées, leur séparation ultérieure sans endommager les aimants est quasi impossible. On comprend donc que l'assemblage d'une machine à aimants permanents par une telle méthode est coûteux et dangereux pour un opérateur, et les risques d'endommager ou de casser les aimants sont très élevés.

L'invention a pour objet de remédier aux inconvénients de la technique antérieure, en proposant un procédé d'assemblage de machine électrique à aimants permanents qui soit plus aisé et qui comporte moins de risques d'accidents et d'endommagement du matériel. Dans la description qui suit, seul les exemples ou aspects couverts par les revendications sont objets de l'invention.

A cet effet, l'invention propose, selon un premier aspect, un procédé d'assemblage d'une machine électrique à aimants permanents, la machine électrique comportant au moins deux stators et un rotor de forme circulaire, apte à tourner autour d'un axe, le rotor comprenant une pluralité d'emplacements destinés à recevoir chacun un aimant permanent, le procédé comportant:
- le pré-assemblage des stators et du rotor dépourvu d'aimants permanents, le rotor comprenant une pluralité d'emplacements pré-aménagés aptes à recevoir chacun un aimant permanent,
- la mise en œuvre de moyens de rotation aptes à faire tourner le rotor de manière à amener un dit emplacement pré-aménagé dépourvu d'aimant permanent en correspondance avec un emplacement spatial d'insertion prédéterminé, et
- l'insertion d'un aimant permanent dans ledit emplacement pré-aménagé du rotor mis en correspondance avec ledit emplacement spatial d'insertion prédéterminé.

Avantageusement, l'insertion des aimants permanents se fait successivement, après un pré-assemblage du ou des stators et du rotor dépourvu d'aimants permanents, ce qui simplifie largement le procédé d'insertion. L'insertion d'un aimant permanent se fait à un emplacement spatial d'insertion prédéterminé, qui est fixe, et le rotor est tourné afin de présenter un emplacement pré-aménagé dépourvu d'aimant en correspondance avec l'emplacement spatial d'insertion prédéterminé. Cela permet de réduire les risques d'endommagement des aimants insérés, car les forces d'interactions magnétiques entre les aimants sont réduites dans ce cas. De plus, ce procédé d'assemblage permet également de réduire le risque d'accident pour un opérateur.

Le procédé d'assemblage d'une machine électrique à aimants permanents selon l'invention peut également présenter une ou plusieurs des caractéristiques ci-dessous :
- il comprend la mise en œuvre desdits moyens de rotation selon une séquence prédéterminée, de manière à présenter successivement en regard dudit emplacement spatial d'insertion prédéterminé chacun des emplacements pré-aménagés du rotor ;
- l'insertion d'un aimant permanent est réalisée par un outillage d'insertion adapté, fixe par rapport aux stators et apte à insérer un aimant permanent dans un emplacement pré-aménagé du rotor au niveau de l'emplacement spatial d'insertion prédéterminé ;
- la machine électrique est une machine à flux axial, comprenant deux stators et un rotor entre les deux stators, le rotor comprenant des emplacements pré-aménagés aptes à recevoir des aimants permanents positionnés dans le plan radial dudit rotor, l'insertion d'un aimant permanent se faisant au niveau de l'emplacement spatial d'insertion prédéterminé selon la direction radiale ;
- la machine électrique comprend en outre une structure de protection permettant de protéger l'espace entre les deux stators, ladite structure de protection comportant au moins une fenêtre d'accès permettant l'insertion d'un aimant permanent dans un dit emplacement pré-aménagé du rotor ;
- le rotor a une forme de disque comportant des ouvertures radiales régulièrement espacées sur une couronne circulaire extérieure ;
- la machine électrique est une machine à flux radial, comprenant deux stators entourant un rotor, le rotor comprenant des emplacements pré-aménagés aptes à recevoir des aimants permanents positionnés axialement dans une couronne du rotor, l'insertion d'un aimant permanent se faisant au niveau d'un emplacement pré-aménagé selon la direction axiale du rotor ;
- la machine électrique est positionnée de manière à ce que l'axe de rotation du rotor soit vertical.

Selon un deuxième aspect, l'invention concerne une installation d'assemblage d'une machine électrique à aimants permanents, la machine électrique comportant deux stators et un rotor de forme circulaire, apte à tourner autour d'un axe, le rotor comprenant une pluralité d'emplacements destinés à recevoir chacun un aimant permanent, dans laquelle le ou les stators et le rotor dépourvu d'aimants sont pré-assemblés, le rotor comprenant une pluralité d'emplacements pré-aménagés aptes à recevoir chacun un aimant permanent. L'installation selon l'invention comporte :
- des moyens de rotation aptes à faire tourner le rotor de manière à amener un dit emplacement pré-aménagé dépourvu d'aimant en correspondance avec un emplacement spatial d'insertion prédéterminé, et
- un outillage d'insertion adapté, fixé par rapport à la machine électrique et apte à insérer un aimant permanent, au niveau de l'emplacement spatial d'insertion prédéterminé, dans l'emplacement pré-aménagé dans le rotor mis en correspondance avec ledit emplacement spatial d'insertion prédéterminé.

Les avantages de l'installation d'assemblage d'une machine électrique à aimants permanents sont analogues aux avantages du procédé d'assemblage d'une machine électrique à aimants permanents brièvement décrit ci-dessus.

Selon un mode de réalisation, l'installation d'assemblage d'une machine électrique à aimants permanents comporte des moyens d'aimantation, aptes à magnétiser un aimant permanent à partir d'un bloc de matériau, lesdits moyens d'aimantation étant mis en œuvre avant l'insertion dudit aimant permanent dans ledit emplacement pré-aménagé du rotor.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue éclatée de l'ensemble d'éléments formant une machine à flux axial selon un mode de réalisation ;
- la figure 2 est une vue d'un détail d'un rotor et du positionnement des aimants dans le rotor selon l'invention ;
- la figure 3 est une vue en coupe transversale d'une installation d'assemblage d'une machine à aimants permanents à flux axial selon un mode de réalisation de l'invention ;
- la figure 4 est une vue en coupe longitudinale d'une installation d'assemblage d'une machine à aimants permanents à flux axial selon un mode de réalisation de l'invention, et
- la figure 5 est une vue schématique d'une installation d'assemblage d'une machine à aimants permanents à flux radial selon un exemple illustratif.

L'invention sera décrite dans son application à une machine électrique qui est un générateur électrique à aimants permanents. Les aimants permanents seront appelés simplement aimants dans la suite de la description.

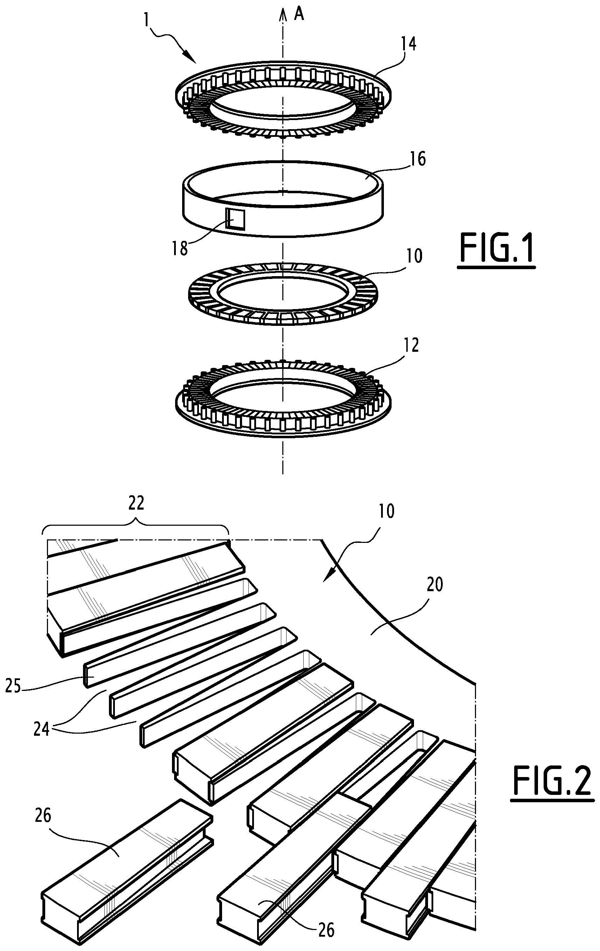

La figure 1 représente l'ensemble des éléments composant un générateur 1 à flux axial, présentés séparément, avant leur assemblage.

Le générateur 1 comprend un rotor 10 en forme de disque apte à tourner autour d'un axe de rotation A, deux stators également circulaires 12, 14 et une structure de protection 16 en forme d'anneau, qui est externe aux stators dans le mode de réalisation de la figure 1. En variante, la structure de protection 16 peut être intégrée à l'un des stators, ou aux deux si elle est découpée en deux parties. La structure de protection 16 permet de protéger l'espace entre les deux stators, et en plus, dans ce mode de réalisation, de connecter mécaniquement les deux stators.

Pour le fonctionnement du générateur 1, le rotor 10 est garni d'un ensemble d'aimants permanents non représentés sur la figure 1, disposés à intervalles réguliers, horizontalement, selon des rayons du rotor 10.

Comme déjà expliqué, selon le procédé d'assemblage connu de l'état de l'art antérieur, les éléments d'un tel générateur électrique sont d'abord préparés, en particulier le rotor est garni d'aimants, et ensuite assemblés selon la direction axiale A de manière à positionner le rotor « en sandwich » entre les deux stators, avec un faible espace vide entre le rotor et chacun des stators.

Selon l'invention, dans le mode de réalisation de la figure 1, la structure de protection 16 comporte une fenêtre d'accès 18, dont la taille est suffisante pour permettre l'insertion d'un aimant. Typiquement, la taille de la fenêtre est plus grande que la plus grande section transversale d'un aimant destiné à être inséré dans le rotor. Notons que dans le cas alternatif où la structure de protection 16 est intégrée à au moins un des stators, elle fait partie du châssis des stators, une fenêtre d'accès est pratiquée directement dans ce châssis, l'objectif étant qu'une fois les stators assemblés avec la structure de protection, l'ensemble présente une fenêtre d'accès 18, dont la taille est suffisante pour permettre l'insertion d'un aimant et dont la position permet l'insertion de l'aimant selon une direction prédéterminée dans le rotor. Dans le cas où la structure de protection 16 est formée en deux ou plusieurs parties, des ouvertures sont pratiquées dans ces parties pour former au final, après assemblage des éléments 12, 16, 14, une fenêtre d'accès 18 telle que décrite ci-dessus.

De plus, comme représenté à la figure 2, le rotor 10 comporte un disque 20 et une couronne externe 22, dans laquelle sont formés des emplacements pré-aménagés 24, qui sont des ouvertures radiales régulièrement espacées, formées entre des dents 25 et aptes à recevoir ultérieurement par l'extérieur des aimants 26. Les emplacements pré-aménagés 24 permettent notamment l'insertion par l'extérieur selon une direction radiale de chacun des aimants 26, comme indiqué sur la figure 2. Dans le mode de réalisation illustré à la figure 2, les emplacements pré-aménagés 24 sont adaptés à recevoir des aimants de forme trapézoïdale. Alternativement, d'autres configurations, comme par exemple des emplacements pré-aménagés adaptés à recevoir des aimants rectangulaires ou de toute autre forme géométrique sont envisageables.

Selon l'invention, le rotor 10 dépourvu d'aimants est initialement pré-assemblé avec les deux stators 12, 14 et avec la structure de protection 16.

Il est à noter que l'utilisation d'une structure 16 est optionnelle, en particulier car d'autres moyens de fixation mécanique des stators peuvent être prévus. Dans un tel cas alternatif, le procédé selon l'invention comporte simplement une première étape de pré-assemblage du rotor 10 dépourvu d'aimants avec les deux stators 12, 14.

Le rotor 10 présente donc des emplacements pré-aménagés 24 ouverts sur l'extérieur de sa circonférence de manière à permettre une insertion des aimants par l'extérieur. Selon l'invention, le rotor 10 est tourné de manière à présenter les emplacements pré-aménagés 24 pour recevoir chacun un aimant 26 à un emplacement spatial fixé prédéterminé, ce qui permet d'utiliser un outillage fixé pour l'insertion.

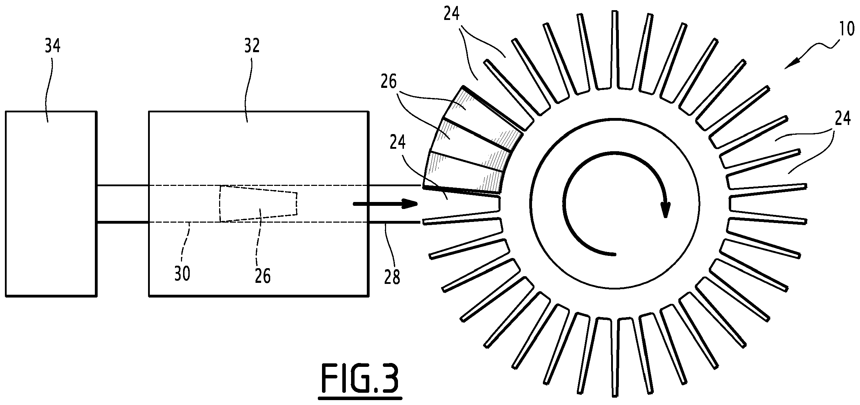

La figure 3, est une vue en coupe transversale d'une installation selon un mode de réalisation de l'invention. L'installation comporte des moyens de rotation (non représentés sur la figure 3) permettant de faire tourner le rotor 10 selon une séquence de rotation prédéfinie, pour amener successivement des emplacements pré-aménagés 24, aptes à recevoir chacun un aimant, en correspondance avec un emplacement spatial d'insertion 28 fixe, qui est prédéterminé. L'emplacement spatial d'insertion 28 correspond à l'arrivée d'un rail 30 d'un outillage 32 d'insertion d'aimants. L'outillage d'insertion est fixé par rapport aux stators. Dans un mode de réalisation, l'outillage est fixé par rapport à la machine électrique. Typiquement, l'outillage d'insertion est attaché à un élément fixe de la machine électrique comprenant le rotor et les stators pré-assemblés ensemble. Ainsi, un aimant 26 est amené par l'outillage d'insertion 32 pour être inséré dans l'emplacement pré-aménagé 24, comme représenté par la flèche de la figure 3.

Le fait de fixer un emplacement spatial d'insertion 28 permet une réalisation aisée de l'assemblage, le réglage de l'outillage d'insertion 32 étant fait une fois pour toutes, alors que la rotation du rotor par des moyens de rotation appropriés ne présente pas de difficulté particulière.

L'insertion des aimants se fait donc successivement, et selon une direction radiale pour le générateur à flux axial de ce mode de réalisation. Avantageusement, les forces d'interactions magnétiques entre les aimants sont réduites lorsque l'insertion se fait de cette manière.

De manière optionnelle, l'installation selon l'invention comprend également des moyens d'aimantation 34, qui permettent l'aimantation de blocs de matériau sur le site d'assemblage. De manière avantageuse, le coût du transport et les risques d'endommagement des blocs aimantés sont largement réduits en utilisant une aimantation sur place.

L'outillage adapté d'insertion 32 permet de contrôler chaque aimant 26, qui est fixé à l'intérieur jusqu'à l'emplacement spatial d'insertion 28 prédéterminé, où il est positionné et fixé dans l'emplacement pré-aménagé 24 du rotor 10 prévu à cet effet.

La rotation du rotor 10 se fait selon une séquence prédéterminée, par exemple en présentant les emplacements vides un par un dans l'ordre défini par le sens de rotation.

En variante, une autre séquence, par exemple en présentant un emplacement pré-aménagé sur deux ou un emplacement pré-aménagé sur n, et ensuite les emplacements restants, est prévue.

Selon un mode de réalisation alternatif, une séquence de présentation des emplacements pré-aménagés en vue de l'insertion successive des aimants est calculée afin de réduire le couple résistant électromagnétique formé par les interactions entre les aimants déjà insérés et les stators.

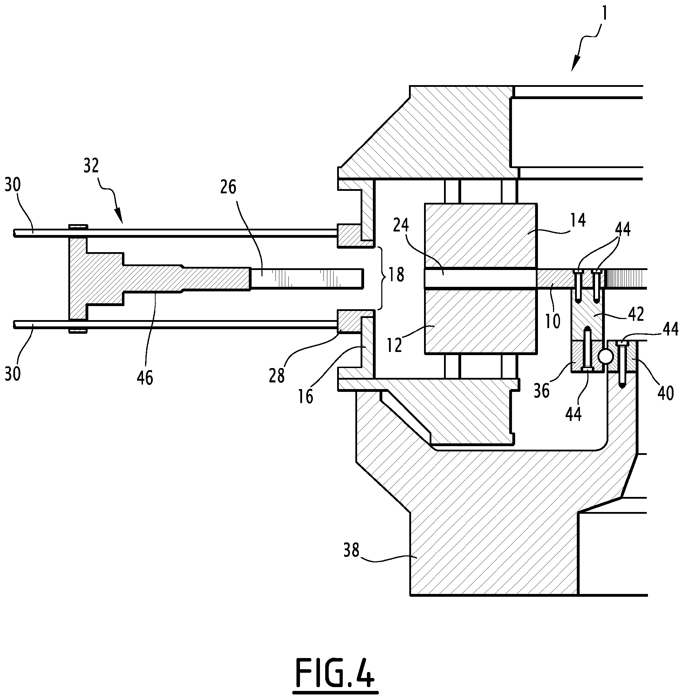

La figure 4 illustre une vue en coupe longitudinale d'une installation apte à assembler une machine électrique selon un mode de réalisation de l'invention, comprenant notamment l'outillage d'installation 32.

Dans ce mode de réalisation, le générateur électrique est posé avec son axe de rotation, qui est également l'axe de rotation du rotor, en position verticale, ce qui permet une insertion des aimants dans le plan horizontal, qui est le plan radial du rotor.

Des moyens de rotation 36, connectés au châssis fixe 38, via une partie fixée 40, et connectés au rotor 10 via un anneau de connexion 42 permettent de faire tourner le rotor 10 autour de son axe de rotation de manière à positionner un emplacement pré-aménagé 24 en correspondance avec l'emplacement spatial d'insertion 28. Les moyens de connexion de la partie fixée 40 au châssis 38, et de l'anneau de connexion 42 avec les moyens de rotation 36 et avec le rotor 10 sont par exemple des vis 44 comme représenté sur la figure. Les moyens de rotation 36 sont par exemple constitués d'un roulement entraîné par un moteur non représenté, formant un engrenage apte à entraîner en rotation l'anneau de connexion 42 fixé au rotor 10. Bien entendu, d'autres variantes de réalisation des moyens de rotation sont envisageables.

La fenêtre 18 de la structure de protection 16 est également préalablement positionnée en correspondance avec l'emplacement spatial d'insertion prédéterminé 28.

Un aimant 26 est guidé vers l'emplacement 24 par un mécanisme de support 46, adapté à glisser sur les rails 30.

Bien évidemment, d'autres outillages alternatifs adaptés à insérer un aimant à un emplacement spatial d'insertion fixe prédéterminé peuvent être envisagés. Par exemple, un autre positionnement de l'axe de rotation du rotor et une adaptation des moyens de rotation et de l'outillage d'insertion sont envisageables.

En résumé, un procédé d'assemblage d'une machine électrique à aimants permanents selon l'invention comporte les étapes suivantes :
- le pré-assemblage des stators 12, 14 et du rotor 10 dépourvu d'aimants permanents, le rotor 10 comprenant une pluralité d'emplacements pré-aménagés 24 aptes à recevoir chacun un aimant permanent 26,
- la mise en œuvre de moyens de rotation 36 aptes à faire tourner le rotor de manière à amener un dit emplacement pré-aménagé 24 dépourvu d'aimant permanent en correspondance avec un emplacement spatial d'insertion 28 prédéterminé, et
- l'insertion d'un aimant permanent 26 dans l'emplacement pré-aménagé 24 dans le rotor mis en correspondance avec ledit emplacement spatial d'insertion 28 prédéterminé.

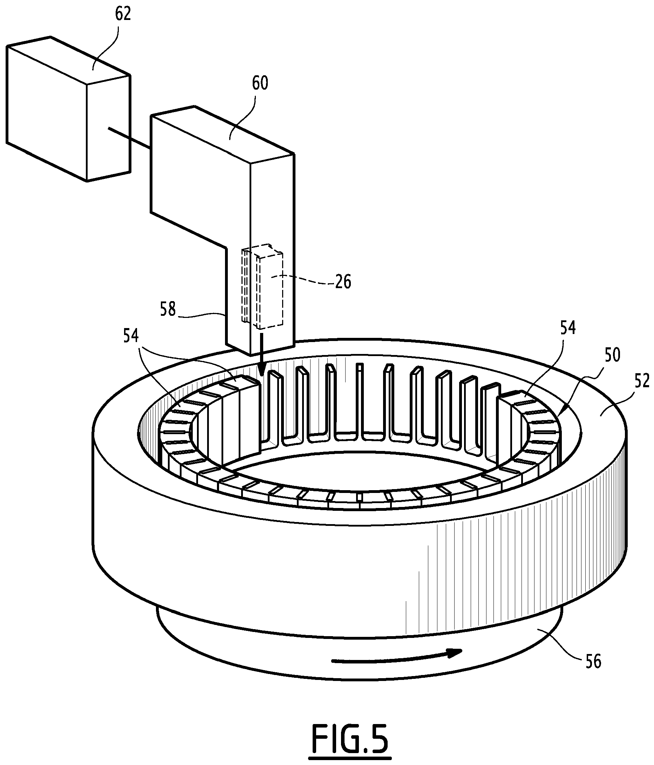

La figure 5 représente schématiquement une installation d'assemblage d'une machine électrique à aimants permanents à flux radial.

Une machine à flux radial selon ce exemple comporte un rotor 50 positionné à l'intérieur d'un stator 52.

En variante, le rotor 50 est positionné à l'extérieur du stator 52, le rotor et le stator étant co-axiaux.

Le rotor comprend des emplacements pré-aménagés 54 aptes à recevoir des aimants 26 par au moins une face extérieure de la couronne cylindrique formant le rotor.

Dans ce mode de réalisation, le rotor 50 et le stator 52 présentent des hauteurs similaires. Les emplacements 54 pré-aménagés dans le rotor sont aptes à recevoir des aimants positionnés axialement dans la couronne du rotor, de manière à obtenir un flux radial.

L'installation comprend également des moyens de rotation 56, aptes à faire tourner le rotor pour positionner chaque emplacement pré-aménagé 54 en correspondance avec un emplacement spatial d'insertion 58 prédéterminé.

L'outillage d'installation 60, représenté schématiquement sur la figure 5, permet de positionner les aimants 26 au niveau de l'emplacement spatial d'insertion 58, pour une insertion par l'extérieur selon la direction axiale. L'outillage d'insertion 60 est de préférence fixé à un élément fixe de la machine électrique.

En option, comme déjà expliqué, des moyens d'aimantation 62 sont prévus, afin de permettre une aimantation sur place de chacun de blocs de matériau, de manière à magnétiser les aimants 26 à insérer, juste avant leur assemblage dans le rotor.

Comme dans le mode de réalisation détaillé ci-avant pour l'assemblage d'une machine électrique à flux axial, une séquence prédéterminée est appliquée pour la rotation du rotor, afin de présenter successivement l'ensemble des emplacements 54 dans lesquels un aimant est à insérer. La séquence prédéterminée est, en alternative, calculée de manière à faciliter l'insertion en réduisant le couple résistant magnétique crée.

On peut noter que d'une manière générale, le coût de réalisation des moyens de rotation, dans le cas axial comme dans le cas radial, devient négligeable si une fabrication en grand nombre de telles machines électriques est envisagée.

Diverses variantes à la portée de l'homme du métier sont à considérer comme faisant partie de la présente invention.

En particulier, une machine électrique à aimants permanents peut être montée avec une coque ou structure de protection, qui peut être intégrée à un ou aux deux stators. Dans ce cas, au moins une fenêtre d'accès adaptée pour l'insertion d'aimants dans les emplacements pré-aménagés du rotor sera prévue dans une telle structure de protection, afin de permettre l'insertion par l'extérieur des aimants après pré-assemblage.

L'invention permet un assemblage plus facile et plus sécurisé des aimants permanents de grande taille et puissance dans un rotor de machine électrique, ce qui simplifie la logistique, limite le risque d'endommagement du matériel et le risque d'accidents pour les opérateurs.

## Revendications

1. Procédé d'assemblage d'une machine électrique (1) à aimants permanents à flux axial, la machine électrique comprenant deux stators (12,14) et un rotor (10) entre les deux stators et de forme circulaire, apte à tourner autour d'un axe (A), le rotor (10) comprenant une pluralité d'emplacements destinés à recevoir chacun un aimant permanent positionné dans le plan radial du dit rotor, comportant:
- le pré-assemblage des stators (12,14) et du rotor (10) dépourvu d'aimants permanents, le rotor (10) comprenant une pluralité d'emplacements pré-aménagés (24) aptes à recevoir chacun un aimant permanent (26),
- la mise en oeuvre de moyens de rotation (36) aptes à faire tourner le rotor (10) de manière à amener un dit emplacement pré-aménagé dépourvu d'aimant permanent en correspondance avec un emplacement spatial d'insertion (28) prédéterminé, et
- l'insertion d'un aimant permanent (26) dans ledit emplacement pré-aménagé (24) du rotor (10) mis en correspondance avec ledit emplacement spatial d'insertion (28) prédéterminé selon la direction radiale.

2. Procédé d'assemblage selon la revendication 1, **caractérisé en ce qu'**il comprend la mise en oeuvre desdits moyens de rotation (36) selon une séquence prédéterminée, de manière à présenter successivement en regard dudit emplacement spatial d'insertion (28) prédéterminé chacun des emplacements pré-aménagés (24) du rotor (10).

3. Procédé d'assemblage selon l'une quelconque des revendications 1 ou 2, **caractérisé en ce que** l'insertion d'un aimant permanent (26) est réalisée par un outillage d'insertion adapté (32), fixe par rapport aux stators et apte à insérer un aimant permanent (26) dans un emplacement pré-aménagé (24) du rotor (10) au niveau de l'emplacement spatial d'insertion (28) prédéterminé.

4. Procédé d'assemblage selon la revendication 1, la machine électrique comprenant en outre une structure de protection (16) permettant de protéger l'espace entre les deux stators (12,14), **caractérisé en ce que** ladite structure de protection (16) comporte au moins une fenêtre d'accès (18) permettant l'insertion d'un aimant permanent (26) dans un dit emplacement pré-aménagé (24) du rotor (10).

5. Procédé d'assemblage selon l'une des revendications 1 ou 4, **caractérisé en ce que** le rotor (10) a une forme de disque comportant des ouvertures radiales régulièrement espacées sur une couronne circulaire extérieure.

6. Procédé d'assemblage selon l'une quelconque des revendications 1 à 5, **caractérisé en ce que** la machine électrique est positionnée de manière à ce que l'axe de rotation du rotor (10) soit vertical.

7. Installation d'assemblage d'une machine électrique à flux axial à aimants permanents, la machine électrique comportant deux stators (12, 14) et un rotor (10) entre les deux stators et de forme circulaire, apte à tourner autour d'un axe (A), le rotor (10) comprenant une pluralité d'emplacements destinés à recevoir chacun un aimant permanent, **caractérisée en ce que** :
- les stators et le rotor (10) dépourvu d'aimants sont pré-assemblés, le rotor (10) comprenant une pluralité d'emplacements pré-aménagés (24) aptes à recevoir chacun un aimant permanent (26) positionné dans le plan radial dudit rotor,
et **en ce que** l'installation comporte :
- des moyens de rotation (36) aptes à faire tourner le rotor (10) de manière à amener un dit emplacement pré-aménagé (24) dépourvu d'aimant en correspondance avec un emplacement spatial d'insertion (28) prédéterminé, et
- un outillage d'insertion adapté (32), fixé par rapport à la machine électrique, et apte à insérer un aimant permanent (26), au niveau de l'emplacement spatial d'insertion (28,) prédéterminé selon la direction radiale, dans l'emplacement pré-aménagé (24) dans le rotor (10) mis en correspondance avec ledit emplacement spatial d'insertion (28) prédéterminé.

8. Installation d'assemblage d'une machine électrique à aimants permanents selon la revendication 7, **caractérisée en ce qu'**elle comporte des moyens d'aimantation (34), aptes à magnétiser un aimant permanent (26) à partir d'un bloc de matériau, lesdits moyens d'aimantation (34) étant mis en oeuvre avant l'insertion dudit aimant permanent (26) dans ledit emplacement pré-aménagé (24) du rotor (10).

## Patentansprüche

1. Verfahren zur Montage einer Axialflusselektromaschine (1) mit Dauermagneten, wobei die Elektromaschine zwei Statoren (12,14) und einen Rotor (10) zwischen den zwei Statoren umfasst, der kreisförmig ist und um eine Achse (A) herum drehen kann, wobei der Rotor (10) eine Vielzahl von Stellen umfasst, die jeweils zum Empfang von einem in der radialen Ebene des Rotors angeordneten Dauermagnet bestimmt sind, umfassend:
- die Vormontage der Statoren (12,14) und des Rotors (10) ohne Dauermagnete, wobei der Rotor (10) eine Vielzahl von vorher eingerichteten Stellen (24) umfasst, die jeweils einen Dauermagnet (26) empfangen können,
- den Einsatz von einem Drehmittel (36), das den Rotor (10) drehen kann, um eine vorher eingerichtete Stelle ohne Dauermagnet an eine vorherbestimmte räumliche Einführungsstelle (28) anzupassen, und
- die Einführung von einem Dauermagnet (26) in die vorher eingerichtete Stelle (24) des Rotors (10), die an die gemäß der radialen Richtung vorherbestimmte räumliche Einführungsstelle (28) angepasst worden ist.

2. Verfahren zur Montage nach Anspruch 1, **dadurch gekennzeichnet, dass** es den Einsatz des Drehmittels (36) gemäß einer vorherbestimmten Reihenfolge umfasst, um jede vorher eingerichtete Stelle (24) des Rotors (10) nacheinander an der vorherbestimmten räumlichen Einführungsstelle (28) bereitzustellen.

3. Verfahren zur Montage nach einem der Ansprüche 1 oder 2, **dadurch gekennzeichnet, dass** die Einführung von einem Dauermagnet (26) durch ein angepasstes Einführungswerkzeug (32) durchgeführt wird, das bezüglich der Statoren fixiert ist und das einen Dauermagnet (26) in eine vorher eingerichtete Stelle (24) des Rotors (10) auf der Ebene der vorherbestimmten räumlichen Einführungsstelle (28) einführen kann.

4. Verfahren zur Einführung nach Anspruch 1, wobei die Elektromaschine weiterhin eine Schutzstruktur (16) umfasst, die den zwischen den zwei Statoren (12,14) vorhandenen Raum schützen kann, **dadurch gekennzeichnet, dass** die Schutzstruktur (16) mindestens ein Zugangsfenster (18) enthält, das die Einführung von einem Dauermagnet (26) in eine vorher eingerichtete Stelle (24) des Rotors (10) ermöglicht.

5. Verfahren zur Einführung nach einem der Ansprüche 1 oder 4, **dadurch gekennzeichnet, dass** der Rotor (10) die Form einer Scheibe hat, die regelmäßig räumlich getrennte radiale Öffnungen auf einem äußeren Kreisring umfasst.

6. Verfahren zur Einführung nach einem der Ansprüche 1 bis 5, **dadurch gekennzeichnet, dass** die Elektromaschine derart angeordnet ist, dass die Drehachse des Rotors (10) vertikal ist.

7. Anlage zur Montage einer Axialflusselektromaschine mit Dauermagneten, wobei die Elektromaschine zwei Statoren (12, 14) und einen Rotor (10) zwischen den zwei Statoren umfasst, der kreisförmig ist und um eine Achse (A) herum drehen kann, wobei der Rotor (10) eine Vielzahl von Stellen umfasst, die jeweils zum Empfang von einem Dauermagnet bestimmt sind, **dadurch gekennzeichnet, dass**:
- die Statoren und der Rotor (10) ohne Magnete vormontiert sind, wobei der Rotor (10) eine Vielzahl von vorher eingerichteten Stellen (24) umfasst, die jeweils einen in der radialen Ebene des Rotors angeordneten Dauermagnet (26) empfangen können,
und dadurch, dass die Installation folgendes enthält:
- ein Drehmittel (36), das den Rotor (10) drehen kann, um eine vorher eingerichtete Stelle (24) ohne Magnet an eine vorherbestimmte räumliche Einführungsstelle (28) anzupassen, und
- ein angepasstes Einführungswerkzeug (32), das bezüglich der Elektromaschine fixiert ist, und das einen Dauermagnet (26) auf der Ebene der gemäß der radialen Richtung vorherbestimmten räumlichen Einführungsstelle (28) in die vorher eingerichtete Stelle (24) des Rotors (10) einführen kann, die an die vorherbestimmte räumliche Einführungsstelle (28) angepasst worden ist.

8. Anlage zur Montage einer Elektromaschine mit Dauermagneten nach Anspruch 7, **dadurch gekennzeichnet, dass** sie ein Magnetisierungsmittel (34) enthält, das einen Dauermagnet (26) ausgehend von einem Materialblock magnetisieren kann, wobei das Magnetisierungsmittel (34) in der vorher eingerichteten Stelle (24) des Rotors (10) vor der Einführung des Dauermagnets (26) eingesetzt wird.

## Claims

1. Method for assembling an axial-flux electric machine (1) having permanent magnets, the electric machine comprising two stators (12, 14) and a rotor (10) between the two stators being circular and capable of turning around an axis (A), the rotor (10) comprising a plurality of sites intended to each receive a permanent magnet positioned in the radial plane of said rotor, including:
- pre-assembling the stators (12, 14) and the rotor (10) devoid of permanent magnets, the rotor (10) comprising a plurality of pre-arranged sites (24) being capable of receiving each a permanent magnet (26),
- applying a rotation means (36) capable of rotating the rotor (10) so as to match one said pre-arranged site devoid of permanent magnet with a predetermined insertion spatial site (28), and
- inserting a permanent magnet (26) into said pre-arranged site (24) of the rotor (10) matched with said insertion spatial site (28) predetermined according to the radial direction.

2. Method for assembling according to claim 1, **characterised in that** it comprises applying said rotation means (36) according to a predetermined sequence, so as to position each of the pre-arranged sites (24) of the rotor (10) successively to face said predetermined insertion spatial site (28).

3. Method for assembling according to any one of claims 1 or 2, **characterised in that** the insertion of a permanent magnet (26) is carried out by an adapted insertion tool (32) that is fixed in relation to the stators and capable of inserting a permanent magnet (26) into a pre-arranged site (24) of the rotor (10) at the level of the predetermined insertion spatial site (28).

4. Method for assembling according to claim 1, the electric machine further comprising a protective structure (16) allowing the protection of the space between the two stators (12,14), **characterised in that** said protective structure (16) includes at least one access window (18) allowing the insertion of a permanent magnet (26) into one said pre-arranged site (24) of the rotor (10).

5. Method for assembling according to one of claims 1 or 4, **characterised in that** the rotor (10) has the form of a disk including regularly spaced radial openings on an outer annulus.

6. Method for assembling according to any one of claims 1 to 5, **characterised in that** the electric machine is positioned so that the rotation axis of the rotor (10) is vertical.

7. Installation for assembling an axial-flux electric machine having permanent magnets, the electric machine including two stators (12, 14) and a rotor (10) between the two stators being circular and capable of turning around an axis (A), the rotor (10) comprising a plurality of sites intended to each receive a permanent magnet, **characterised in that**:
- the stators and the rotor (10) devoid of magnets are pre-assembled, the rotor (10) comprising a plurality of pre-arranged sites (24) capable of receiving each a permanent magnet (26) that is positioned in the radial plane of said rotor,
and **in that** the installation includes:
- a rotations means (36) capable of rotating the rotor (10) so as to match one said pre-arranged site (24) devoid of magnet with a predetermined insertion spatial site (28), and
- an adapted insertion tool (32) that is fixed in relation to the electric machine and capable of inserting a permanent magnet (26) at the level of the insertion spatial site (28) predetermined according to the radial direction into the pre-arranged site (24) within the rotor (10) matched with said predetermined insertion spatial site (28).

8. Installation for assembling an electric machine having permanent magnets according to claim 7, **characterised in that** it includes a magnetization means (34) capable of magnetizing a permanent magnet (26) from a material block, said magnetization means (34) being applied before the insertion of said permanent magnet (26) into said pre-arranged site (24) of the rotor (10).
